# EUROPEAN PATENT APPLICATION

(11) **EP 2 487 201 A1**
(43) Date of publication of application: **15.08.2012**
(21) Application number: 10821942.9
(22) Date of filing: 01.10.2010
(51) Int. Cl.: C08L 23/08, C08K 5/09

(54) **IONOMER COMPOSITION, AND MOLDINGS AND PROCESS FOR PRODUCTION THEREOF**

(30) Priority: 09.10.2009 JP 2009235650
(71) Applicant: Du Pont-Mitsui Polychemicals Co., Ltd., Tokyo 105-7117 (JP)
(72) Inventor: SHINYA, Yoichi, Ichihara-shi Chiba 299-0108 (JP); YAMAMOTO, Yoshimasa, Ichihara-shi Chiba 299-0108 (JP); SAKUMA, Masami, Ichihara-shi Chiba 299-0108 (JP)
(74) Representative: Gulde Hengelhaupt Ziebig & Schneider
(86) International application number: PCT/JP2010/067278
(87) International publication number: WO 2011/043271

(57) **Abstract**

An ionomer composition including an ionomer of an ethylene/α,β-unsaturated carboxylic acid copolymer and a dimer acid is provided.

## Description

### TECHNICAL FIELD

A present invention relates to an ionomer composition preferable as a material for various molded components, to a formed body prepared by using the ionomer composition, and to a method of producing the formed body.

### BACKGROUND ART

Molded articles prepared by utilizing various plastics have been popular as daily consumption goods and industrial products. As one of these molding materials, an ionomer resin has been known.

Ethylene/acrylic acid copolymers, ethylene/methacrylic acid copolymers, ionomers thereof or the like are industrially notable as ethylene copolymers having carboxyl groups or salts thereof and have widely been used mainly in the fields of films and golf balls. As the ionomers, ionomers obtained by neutralizing copolymers of ethylene with unsaturated carboxylic acids partially with metal ions such as Na and Zn, and the like are widely known, and they also have properties varying depending on the content of carboxyl groups or salts thereof. The ethylene copolymers are resinous polymers which have excellent adhesiveness to metals, heat-sealing properties, transparency and other various characteristics.

An ionomer tends to have a melt viscosity that is generally increased with increasing a rate of neutralization with a metal ion and to decrease a melt flowability during melting. When the melt flowability of the ionomer is decreased, there is such a problem that molding processing methods are limited, a long time is needed for molding, or a molten resin cannot well enter into details in a die with a complicated shape to cause a defective article to be produced. If the melt flowability is able to be controlled without substantially impairing the above-described excellent characteristics, its development to further various applications is expected.

Generally, there is a method of adding a improving agents for the melt flowability in order to improve the melt flowability of a resin. Such improving agents for the melt flowability are those sold as lubricants such as fatty acid metal salts and fatty acid amides and those sold as plasticizers such as phthalate esters (for example, see Non Patent Document 1).
Also, a method of mixing a high fluid resin and the like are conceivable.

### Prior Art Documents

### [Non Patent Document]

Non Patent Document 1: "ENBI(Polyvinyl Chloride) à la Carte" (fourth edition, pp. 56-57, published on October 15, 1993, Polymer Industrial Laboratory Co., Ltd.)

### DISCLOSURE OF THE INVENTION

### PROBLEM TO BE SOLVED BY THE INVENTION

However, plasticizers and lubricants that have conventionally been used have poor compatibility with ionomers and cannot be added to such an extent that melt flowability is improved. Thus, there has been a limit in improvement in melt flowability. Also, there has been a problem that a phenomenon in which the added plasticizers or lubricants bleed out with time (so-called bleed-out) occurs, or the like, so that a formed body has become sticky and dust adhering to the molded article has tended to be difficult to remove due to the stickiness. In the case of molding them in film or sheet shapes and overlapping them or rewinding them in roll shapes, blocking has also sometimes occurred in a point in which they are overlapped to cause the point to be difficult to peel off. Further, mixing of a high fluid resin with an ionomer has sometimes sacrificed transparency, which is one of the characteristics of ionomers, due to poor compatibility with the ionomer.

The present invention has been made in view of the above-described circumstances. An ionomer composition which occurrence of bleed-out is suppressed and the ionomer is imparted moderate melt flowability is needed under the above-described circumstances. Also, needed are a formed body that has a little pollution, causes no blocking and has a good shape, and a method of producing the formed body.

### MEANS FOR SOLVING THE PROBLEM

Specific means to solve the problems are described below.
<1> An ionomer composition including an ionomer of an ethylene/α,β-unsaturated carboxylic acid copolymer and a dimer acid.

MFR (melt flow rate) may easily be controlled by adding the dimer acid to the ionomer.

<2> In the ionomer composition as described in <1>, a content ratio of the dimer acid relative to 100 parts by mass of a total amount of the ionomer and the dimer acid is preferable from 1 to 50 parts by mass. Furthermore,
<3> in the ionomer composition as described in <1>, a content ratio of the dimer acid relative to 100 parts by mass of a total amount of the ionomer and the dimer acid is preferable from 1 to 30 parts by mass.

Bleeding out (bleed-out) rarely occurs and excellent melt flowability is obtained during melting, since the content ratio of the dimer acid to 100 parts by mass of the total amount of the ionomer and the dimer acid is from 1 to 50 parts by mass, in other words, the content ratio of the dimer acid to the total amount of the ionomer and the dimer acid is in the range of from 1 to 50 mass%. In addition, a formed body that does not cause any pollution or blocking is easily formed since the content ratio of the dimer acid is in the range of from 1 to 30% by mass to further suppress the occurrence of bleeding out (bleed-out).

<4> In the ionomer composition as described in any one of the above <1> to <3>, the α,β-unsaturated carboxylic acid is preferable at least one of acrylic acid or methacrylic acid.

<5> In the ionomer composition as described in any one of the above <1> to <4>, the ethylene/α,β-unsaturated carboxylic acid copolymer may also be further copolymerized with an α,β-unsaturated carboxylic ester to provide an ethylene/α,β-unsaturated carboxylic acid/α,β-unsaturated carboxylic ester copolymer.

The ionomer of the ethylene/α,β-unsaturated carboxylic acid/α,β-unsaturated carboxylic ester copolymer obtained by being further copolymerized with the α,β-unsaturated carboxylic ester as well as the ethylene and the α,β-unsaturated carboxylic acid has a high affinity for polyesters and the like due to the presence of an ester group and is used in lamination or blend with these polyesters.

<6> In the ionomer composition as described in <5>, the α,β-unsaturated carboxylic ester is preferably an alkyl ester wherein the alkyl has from 1 to 8 carbon atoms of an unsaturated carboxylic acid.
Such an ethylene/α,β-unsaturated carboxylic acid copolymer is a random copolymer of ethylene with an α,β-unsaturated carboxylic acid, obtained, for example, by the well-known radical polymerization method under a high temperature and a high pressure.

<7> In the ionomer composition as described in any one of the above <1> to <6>, the ionomer is preferable at least one selected from zinc ionomers of ethylene/(meth)acrylic acid copolymers, sodium ionomers of ethylene/(meth)acrylic acid copolymers, or magnesium ionomers of ethylene/(meth)acrylic acid copolymers.
<8> A formed body molded using the ionomer composition as described in any one of the above <1> to <7>.

Since the formed body as described in <8> above is molded with maintained melt flowability while suppressing occurrence of bleeding out (bleed-out) by using the ionomer composition containing the dimer acid as a compound added with an ionomer, a molten resin may be made to well enter into details in a die with a complicated shape, and the formed body is excellent in shape and surface property. Even if the formed body is stored or used for a long period, the adhesion of fouling and the occurrence of blocking due to the stickiness of a molded article are also suppressed.

<9> A method of producing a formed body including melt-molding-processing the ionomer composition as described in any one of the above <1> to <7> (for example, forming a film by extrusion or performing shaping by injection molding).

In the method of producing a formed body as described in <9>, a time required for molding process is shortened to moreover facilitate molding of a fine portion, since moderate melt flowability may be kept during the molding by using the ionomer composition including the ionomer and the dimer acid. As a result, production of a defective article may also be intended to be prevented. In addition, a formed body in which the occurrence of fouling of a die caused the occurrrence of bleeding out (bleed-out) is prevented is obtained.

### EFFECT OF THE INVENTION

In accordance with the present invention, an ionomer composition wherein occurrence of bleed-out (bleeding out) is suppressed and the ionomer is imparted moderate melt flowability may be provided. Also, in accordance with the present invention, there may be provided a formed body that has a little pollution, causes no blocking and has a good shape, and a method of producing the formed body.

### BEST MODE FOR CARRYING OUT THE INVENTION

The ionomer composition according to the present invention, the formed body prepared by using the ionomer composition, and the method of producing the formed body are described in detail below.

### <Ionomer Composition>

The ionomer composition according to the present invention includes at least an ionomer of an ethylene/α,β-unsaturated carboxylic acid copolymer and a dimer acid. The ionomer composition according to the present invention may be constituted by using another optional component such as an ultraviolet absorber, a light stabilizer, a weathering stabilizer, an antioxidant, an antistatic agent, an inorganic filler, a fire retardant, a fire retarding auxiliary, a foaming agent, a foaming auxiliary, a cross-linking agent, a cross-linking auxiliary or a coloring agent such as a pigment, in the range of preventing the purpose and effect thereof from being impaired.

In accordance with the present invention, the use of the ionomer of the ethylene-based copolymer and the dimer acid allows the improvement of the melt flowability of an ionomer resin and the maintenance of the characteristics of the ionomer in this case without impairing the characteristics. In addition, the occurrence of bleed-out (bleeding out) of the dimer acid in the case of being imparted with melt flowability may be suppressed to a low frequency, and the occurrence of stickiness due to die pollution or bleeding out to the surface of a formed body during molding can be avoided.

### [Ionomer]

An ionomer of an ethylene/α,β-unsaturated carboxylic acid copolymer contained in an ionomer composition is a resin obtained by neutralizing with metal ions at least a part of a copolymer having a constituent unit derived from ethylene and a constituent unit derived from an α,β-unsaturated carboxylic acid.

In the ethylene/α,β-unsaturated carboxylic acid copolymer as a base polymer, the content ratio of the constituent unit derived from the α,β-unsaturated carboxylic acid is preferably 1-35 mass%, more preferably 10-20 mass%. The content ratio of the constituent unit derived from the ethylene is preferably 99-65 mass%, more preferably 90-80 mass%.

The ethylene/α,β-unsaturated carboxylic acid copolymer in accordance with the present invention may be not only a binary copolymer of ethylene with an α,β-unsaturated carboxylic acid but also a multicomponent copolymer obtained by being copolymerized with another optional monomer.

The content ratio of the constituent unit derived from the α,β-unsaturated carboxylic acid of 1 mass% or more means that the constituent unit derived from the α,β-unsaturated carboxylic acid is positively contained, and excellent transparency and metal adhesiveness are obtained by containing the α,β-unsaturated carboxylic acid. When the content ratio of the constituent unit derived from the α,β-unsaturated carboxylic acid is 35 mass% or less, practical heat resistance may be maintained.

Examples of the α,β-unsaturated carboxylic acid include acrylic acid, methacrylic acid, maleic acid, fumaric acid, maleic anhydrides, maleic acid monoesters and the like, and acrylic acid or methacrylic acid is particularly preferable.

In accordance with the present invention, ionomers of ethylene/acrylic acid copolymers and ionomers of ethylene/methacrylic acid copolymers are preferable in the point of availability. Specifically, particularly preferable examples of ethylene-based ionomers may include zinc ionomers of ethylene/acrylic acid copolymers, sodium ionomers of ethylene/acrylic acid copolymers, zinc ionomers of ethylene/methacrylic acid copolymers, and sodium ionomers of ethylene/methacrylic acid copolymers.

When the ionomer in accordance with the present invention is a multicomponent copolymer obtained by being further copolymerized with another monomer as well as the ethylene and the α,β-unsaturated carboxylic acid, examples of the other monomer which may be copolymerized include vinyl esters such as vinyl acetate and vinyl propionate; α/β-unsaturated carboxylic esters such as methyl acrylate, ethyl acrylate, isopropyl acrylate, isobutyl acrylate, n-butyl acrylate, isooctyl acrylate, 2-ethylhexyl acrylate, methyl methacrylate, ethyl methacrylate, isobutyl methacrylate, dimethyl maleate and diethyl maleate; carbon monoxide; and the like. These monomers may also be copolymerized in the range of, for example, more than 0 mass% and 30 mass% or less, preferably more than 0 mass% and 20 mass% or less, further preferably more than 0 mass% and 10 mass% or less, based on the total mass of the ionomer.

Examples of the α,β-unsaturated carboxylic esters include alkyl ester with alkyl having 1 to 12 carbon atoms (preferably 1 to 8 carbon atoms) of an unsaturated carboxylic acids, such as alkyl acrylates, alkyl methacrylates, alkyl ethacrylates, alkyl crotonates, alkyl fumarates, alkyl maleates, monoalkyl maleates, alkyl maleic anhydride esters, alkyl itaconates and alkyl itaconic anhydride esters. Inclusion of constituent units derived from these α,β-unsaturated carboxylic esters is preferred since the flexibility of an ethylene/α,β-unsaturated carboxylic acid copolymer is improved.

Alkyl sites of the alkyl esters may include ones having 1 to 12 carbon atoms, and more specifically, the examples of the site include alkyl groups such as methyl, ethyl, n-propyl, isopropyl, n-butyl, isobutyl, secondary butyl, 2-ethylhexyl and isooctyl. Of them, alkyl esters that the alkyl site has from 1 to 8 carbon atoms are preferable.
As the α,β-unsaturated carboxylic esters, methyl esters, ethyl esters, normal butyl esters and isobutyl esters of acrylic acid or methacrylic acid are particularly preferable.

In accordance with the present invention, particularly preferable ethylene/α,β-unsaturated carboxylic acid/α,β-unsaturated carboxylic ester copolymers are ethylene/(meth)acrylic acid/(meth)acrylic ester copolymers, especially, ethylene/(meth)acrylic acid/methyl acrylate copolymers, ethylene/(meth)acrylic acid/ethyl acrylate copolymers, ethylene/(meth)acrylic acid/normal butyl acrylate copolymers, ethylene/(meth)acrylic acid/isobutyl acrylate copolymers, ethylene/(meth)acrylic acid/methyl methacrylate copolymers, ethylene/(meth)acrylic acid/ethyl methacrylate copolymers, ethylene/(meth)acrylic acid/normal butyl methacrylate copolymers and ethylene/isobutyl methacrylate copolymers.

As the ionomers, ionomers obtained by neutralizing with metal ions usually 100% or less, more preferably from 10% to 100%, further preferably from 20% to 100%, most preferably from 50% to 100% of carboxyl groups in the copolymer are preferable. From the viewpoint of processability and flexibility, it is preferable to use ionomers with the degrees of neutralization of from 5% to 60%, particularly from 5% to 30%.

Examples of metal ion include ions of alkali metals such as lithium, sodium and potassium; alkaline-earth metals such as magnesium, calcium and strontium; representative metals and transition metals such as zinc, copper, cobalt, nickel, chromium and lead; and the like. Of them, particularly, ionomers obtained using alkali metals, alkaline-earth metals or zinc are preferable. As the ionomers, zinc ionomers containing zinc as a metal are particularly preferable, without always being limited thereto. Among various ionomers, the zinc ionomers have small moisture absorptions.

The ethylene/unsaturated carboxylic acid copolymers which are the base polymers of the ionomers may be obtained by radical copolymerization of each polymerization component under a high temperature and a high pressure.

### [Dimer Acid]

The ionomer composition according to the present invention includes at least one of dimer acids. A dimer acid is a polycarboxylic acid obtained by polymerization reaction of two or more molecules in an unsaturated fatty acid, is usually obtained as a mixture of two or more kinds, and is offered in various applications as the mixture.
A dimer acid is obtained by dimerizing a straight- or branched-chain unsaturated fatty acid having from 8 to 22 carbon atoms and encompasses derivatives thereof. Such derivatives of dimer acids may include hydrogenated substances and the like. Specifically, hydrogenated dimer acids obtained by subj ecting the dimer acids to hydrogenation, in other words, hydrogenation reaction (also referred to as dimer acid, hydrogenated) and reducing a contained unsaturated bond, and the like, may be used.
Inclusion of a dimer acid together with the ionomer improves the melt flowability of the ionomer.

The dimer acids may be obtained by using, as raw materials, for example, 3-octenoic acid, 10-undecenoic acid, oleic acid, linolic acid, elaidic acid, palmitoleic acid, linolenic acid, or mixtures of two or more of them, or tall oil fatty acids, soybean oil fatty acids, palm oil fatty acids, rice bran oil fatty acids or linseed oil fatty acids which are industrially available mixtures of these unsaturated carboxylic acids, or the like. These dimer acids may also contain a monomer acid or a trimer acid in a small amount.

Conventionally, a dimer acid has been able to be usually produced by dimerizing an unsaturated fatty acid such as a tall oil fatty acid under a high temperature using a montmorillonite-based white clay as a catalyst.

Examples of dimer acids include a chain dimer acid represented by the formula (1) described below.

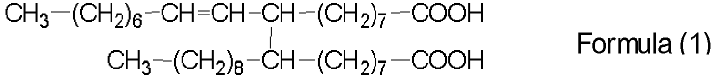

In addition to the chain dimer acid represented by the formula (1), a cyclic dimer acid represented by the formula (2) or (3) described below, a mixture containing the cyclic dimer acid, or the like is obtained.

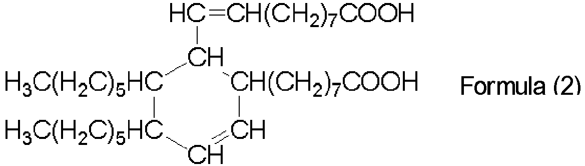

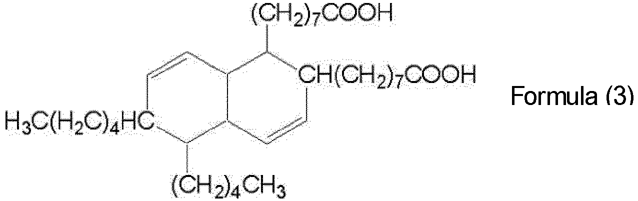

Examples of industrially available dimer acids include Haridimer 200 and 300 (manufactured by Harima Chemicals, Incorporated), Tsunodyme 205 and 395 (manufactured by Tsuno Food Industrial Co., Ltd.), and Empol 1026, 1028, 1061 and 1062 (manufactured by Cognis Japan Ltd.), and hydrogenated dimer acids such as Dimer acid hydrogenated (manufactured by ALDRICH Corporation), Empol 1008 and 1012 (manufactured by Cognis Japan Ltd.), and the like.

Among these dimer acids, the hydrogenated dimer acids substantially have no unsaturated bond. Therefore, instability to heat or light based on the presence of the unsaturated bond may be expected to be low. Accordingly, the possibility of the degradation or discoloration of an ionomer composition may be expected to be further decreased under an environment with extremely high heat or high light intensity. Here, an example of criteria for judgment of substantially having no unsaturated bond is an iodine value. It may be said that a substance exhibiting an iodine value of 50 or less, preferably 30 or less, particularly 15 or less has the practically negligible amount of an unsaturated bond in a molecule even if the amount causes the above-described harmful effects.

In accordance with the present invention, the content ratio of the dimer acid is preferably in the range of from 1 to 50 parts by mass based on 100 parts by mass of the total amount of the ionomer and the dimer acid. The content ratio of the dimer acid of not less than 1 part by mass shows that the dimer acid is positively contained, so that the melt flowability of the ionomer is improved. In addition, the content ratio of the dimer acid of not more than 50 parts by mass may improve the melt flowability of the ionomer while avoiding the occurrence of bleed-out (bleeding out). For the same reason, the content ratio of the dimer acid is more preferably in the range of from 1 to 40 parts by mass. Especially, the content ratio of the dimer acid is more preferably in the range of from 1 to 30 parts by mass, further preferably in the range of from 1 to 5 parts by mass, based on 100 parts by mass of the total amount of the ionomer and the dimer acid. By reducing the content ratio of the dimer acid to not more than 30 parts by mass, the occurrence of the bleed-out (bleeding out) may more effectively be prevented and the ionomer that is transparent and excellent in melt flowability may be obtained. For the same reason, the content ratio of the dimer acid is further preferably in the range of from 1 to 20 parts by mass, particularly preferably in the range of from 1 to 15 parts by mass.

### [Another Component]

### -Silane Coupling Agent-

The ionomer composition according to the present invention may include a silane coupling agent.
The silane coupling agent may be exemplified by γ-methacryloxypropyltrimethoxysilane, γ-methacryloxypropylmethyldimethoxysilane, γ-acryloxypropyltrimethoxysilane, γ-acryloxypropylmethyldimethoxysilane, N-(β-aminoethyl)-γ-aminopropyltrimethoxysilane, N-(β-aminoethyl)-γ-aminopropylmethyldimethoxysilane, γ-aminopropyltriethoxysilane, γ-glycidoxypropyltrimethoxysilane, and the like. Among them, as silane coupling agents, alkoxysilanes with amino groups are preferable in terms of enhancing adhesiveness to a matter to be adhered.

Examples of silane coupling agents comprising the alkoxysilanes with amino groups include aminotrialkoxysilanes with amino group and trialkoxy group, such as 3-aminopropyltrimethoxysilane, 3-aminopropyltriethoxysilane and N-(2-aminoethyl)-3-aminopropyltrimethoxysilane; aminodialkoxysilanes with amino group and dialkoxy group, such as N-(2-aminoethyl)-3-aminopropylmethyldimethoxysilane, N-(2-aminoethyl)-3-aminopropylmethyldiethoxysilane, N-(2-aminoethyl)-3-aminopropyldimethoxysilane, 3-aminopropylmethyldimethoxysilane, 3-aminopropylmethyldiethoxysilane, N-phenyl-3-aminopropylmethyldimethoxysilane, N-phenyl-3-aminopropylmethyldiethoxysilane, 3-methyldimethoxysilyl-N-(1,3-dimethyl-butylidene)propylamine and 3-methyldimethoxysilyl-N-(1,3-dimethyl-butylidene)propylamine; and the like.

Among them, N-(2-aminoethyl)-3-aminopropylmethyldimethoxysilane, N-(2-aminoethyl)-3-aminopropylmethyldiethoxysilane, N-(2-aminoethyl)-3-aminopropyldimethoxysilane, 3-aminopropylmethyldimethoxysilane and 3-aminopropylmethyldiethoxysilane are preferable. Particularly, N-(2-aminoethyl)-3-aminopropylmethyldimethoxysilane is preferable.
Using trialkoxysilanes is preferable because of being able to improve adhesiveness to a matter to be adhered. Using dialkoxysilanes is preferable because of being able to maintain processing stability during molding a sheet.

### -Other Components-

The ionomer composition according to the present invention may further contain an ultraviolet absorber, a light stabilizer, an antioxidant, an anti-aging agent, a heat stabilizer, a lubricant, an antiblocking agent, a plasticizer, an adhesive agent, an inorganic filler, a reinforcement fiber such as a glass fiber or a carbon fiber, a pigment, a dye, a fire retardant, a fire retarding auxiliary, a foaming agent, a foaming auxiliary, or the like. An antistatic agent may also be blended.

Examples of the ultraviolet absorber include benzophenone-based ultraviolet absorber such as 2-hydroxy-4-methoxybenzophenone, 2,2'-dihydroxy-4-methoxybenzophenone, 2-hydroxy-4-methoxy-2-carboxybenzophenone and 2-hydroxy-4-n-octoxybenzophenone; benzotriazole-based ultraviolet absorber such as 2-(2'-hydroxy-3',5'-di-t-butylphenyl)benzotriazole, 2-(2'-hydroxy-5-methylphenyl)benzotriazole and 2-(2'-hydroxy-5-t-octylphenyl)benzotriazole; and salicylate ester-based ultraviolet absorber such as phenyl salicylate and p-octyl phenyl salicylate.
Examples of the light stabilizer include hindered amine-based light stabilizers.
Examples of the antioxidants include various hindered phenol-based antioxidants and phosphite-based antioxidants.

### <Formed body and Method of producing the same>

The formed body according to the present invention is composed using the previously-described ionomer composition according to the present invention and is not limited except being molded using this ionomer composition. In the present invention, the formed body is preferably an extrusion-molded article, a press-molded article or an injection-molded article.

The method of producing the formed body according to the present invention includes supplying the previously-described ionomer composition according to the present invention and molding it under pressurization. For example, the formed body may be produced by supplying the ionomer composition to form a film and performing compression bonding of the obtained film.
Methods of supplying an ionomer when a film is formed are not limited except method that the ionomer is melt to be supplied, and examples of the method include an injection molding method and a melt extrusion molding method. Examples of method of molding under pressurization include a method of entering by pressing into a desired die or the like, a method of pressing a hot plate on a formed film, or the like.

### EXAMPLES

Experiment Examples as Examples in accordance with the present invention are given below to further perform a specific explanation. However, the present invention is not limited to Experiment Examples as described below unless beyond its scope. Unless otherwise specified, "part(s)" is based on mass.

### Materials as shown below were prepared.

### -Resins-

·Ionomer 1: zinc ionomer (degree of neutralization: 59%, MFR: 0.9 g/10 min) of ethylene/methacrylic acid copolymer (constituent unit derived from methacrylic acid = 15 mass%)
·Ionomer 2: sodium ionomer (degree of neutralization: 54%, MFR: 0.9 g/10 min) of ethylene/methacrylic acid copolymer (constituent unit derived from methacrylic acid = 15 mass%)
·Ionomer 3: magnesium ionomer (degree of neutralization: 54%, MFR: 0.7 g/10 min) of ethylene/methacrylic acid copolymer (constituent unit derived from methacrylic acid = 15 mass%)
·Ionomer 4: zinc ionomer (degree of neutralization: 70%, MFR: 1.0 g/10 min) of ethylene/methacrylic acid/isobutyl acrylate copolymer (constituent unit derived from methacrylic acid = 10 mass%, constituent unit derived from isobutyl acrylate = 10 mass%)
·Ionomer 5: sodium ionomer (degree of neutralization: 36%, MFR: 1.0 g/10 min) of ethylene/methacrylic acid/isobutyl acrylate copolymer (constituent unit derived from methacrylic acid = 10 mass%, constituent unit derived from isobutyl acrylate = 10 mass%)

### -Added Compounds-

·Dimer acid 1: Dimer acid hydrogenated (manufactured by ALDRICH Corporation, average molecular weight Mn: 570 or below, content of monomer acid: less than 0.1 mass%, content of trimer acid: less than 0.1 mass%, iodine value: less than 10, density: 0.95 g/ml (25°C), acid value (acid number): 194-198 mg KOH/g)
·Dimer acid 2: Tsunodyme 205 (manufactured by Tsuno Food Industrial Co., Ltd., content of monomer acid: 10.0 mass%, content of trimer acid: 13.8 mass%, viscosity: 6,200 mPa·s, acid value: 191-197 mg KOH/g)
·Diisononyl phthalate: Vinycizer 90 (manufactured by Kao Corporation)
·Dioctyl sebacate: Monocizer W280 (manufactured by Dainippon Ink And Chemicals,
Inc.)

### (Experiment Examples 1-3)

Each of the prepared ionomers 1-3 was blended with the added compounds to have amounts as shown in Table 1, 2 below, and the blend was mixed in a kneader, Labo Prastomill (manufactured by Toyo Seiki Seisaku-sho, Ltd., Mixer(twin-screw)) at 180°C and a rotational speed of 50 min⁻¹ for 10 minutes.

### <Evaluation of Melt flowability>

After the mixing, a melt flow rate (MFR) was measured as an index for melt flowability. In this case, MFR was measured at 190°C and a load of 2,160 g by a method according to JIS K7210-1999. The measurement results are shown in Table 1, 2 below.

The resultant mixture was then press-molded in a sheet shape by a hot press (160°C) to obtain a sample of a press sheet with a thickness of 3 mm.

### <Evaluation of Bleed-Out>

The obtained sample of the press sheet was left to stand for 2 weeks under the conditions of 23°C and a relative humidity of 50%, followed by visually observing the state of a sheet surface to evaluate the presence or absence of the occurrence of bleed-out according to evaluation criteria as described below. The evaluation results are shown in Table 1, 2 below.

### -Evaluation Criteria-

A: Bleed-out did not occur, and the surface of the press sheet was clean.
B: Bleed-out rarely occurred, and little fouling was observed on the surface of the press sheet.
C: Fouling due to the occurrence of bleed-out was observed on the surface of the press sheet.

### <Evaluation of Optical Property>

In addition to the above-described sample, each mixture described in Table 1, 2 below was press-molded in a sheet shape by the hot press (160°C) to make a sample of a press sheet with a thickness of 0.5 mm, and the total luminous transmittance (%) of the sample of each press sheet was measured by a method according to JIS K7105-1981, to evaluate its optical property. The measurement results are shown in Table 1, 2 below.

### (Experiment Examples 4-5)

Mixing was performed in the same manner as in Experiment Example 1 to obtain mixtures and perform evaluation of them except that the ionomer 4 or the ionomer 5 was used in place of the ionomer 1 in Experiment Example 1. The measurement results are shown in Table 2, 3 below.

**[Table 1]**

| | Ionomer | Added compound | | Evaluation | | |
|---|---|---|---|---|---|---|
| | | Kind | Added amount (*1) [%] | MFR [g/10 min] | Bleed-out | total luminous transmittance [%] |
| Experiment Example 1 | Ionomer 1 (Zn ionomer) | None | 0 | 0.9 | *2 | 93.6 |
| | | Dimer acid 1 | 2 | 1.6 | A | 93.3 |
| | | | 5 | 1.7 | A | 93.1 |
| | | | 10 | 2.7 | A | 93.2 |
| | | | 20 | 11.2 | A | 92.5 |
| | | | 30 | *3 | B | *3 |
| | | Dimer acid 2 | 5 | 1.4 | A | 91.9 |
| | | | 10 | 2.5 | A | 92.1 |
| | | | 20 | 14.0 | A | 91.7 |
| | | Diisononyl phthalate | 5 | 1.2 | C | *3 |
| | | | 10 | 1.6 | C | *3 |
| | | Dioctyl sebacate | 5 | 1.7 | C | *3 |
| | | | 10 | 1.8 | C | *3 |
| Experiment Example 2 | Ionomer 2 (Na ionomer) | None | 0 | 0.9 | *2 | 93.9 |
| | | Dimer acid 1 | 2 | 2.0 | A | 93.5 |
| | | | 5 | 3.2 | A | 93.3 |
| | | | 10 | 5.8 | A | 92.8 |
| | | | 20 | 32.9 | A | 93.1 |
| | | | 30 | *3 | B | *3 |
| | | Dimer acid 2 | 5 | 2.9 | A | 93.2 |
| | | | 10 | 6.5 | A | 92.8 |
| | | | 20 | 30.0 | A | 92.7 |
| | | Diisononyl phthalate | 5 | 1.5 | C | *3 |
| | | | 10 | 2.3 | C | *3 |
| | | Dioctyl sebacate | 5 | 1.4 | C | *3 |
| | | | 10 | 2.3 | C | *3 |

| | | | | | | |
|---|---|---|---|---|---|---|
| *1: Content ratio [mass%] of dimer acid to total amount of ionomer and dimer acid *2: No bleed-out because of addition of no dimer acid. *3: Not measured | | | | | | |

**[Table 2]**

| | Ionomer | Added compound | | Evaluation | | |
|---|---|---|---|---|---|---|
| | | Kind | Added amount (*1) [%] | MFR [g/10 min] | Bleed-out | total luminous transmittance [%] |
| Experiment Example 3 | Ionomer 3 (Mg ionomer) | None | 0 | 0.7 | *2 | 92.6 |
| | | Dimer acid 1 | 2 | 1.7 | A | 93.1 |
| | | | 5 | 2.9 | A | 93.2 |
| | | | 10 | 7.1 | A | 93.5 |
| | | | 20 | 33.5 | A | 93.2 |
| | | | 30 | *3 | B | *3 |
| | | Dimer acid 2 | 5 | 2.7 | A | 92.9 |
| | | | 10 | 6.0 | A | 93.2 |
| | | | 20 | 34.0 | A | 92.9 |
| | | Diisononyl phthalate | 5 | 1.4 | C | *3 |
| | | | 10 | 2.0 | C | *3 |
| | | Dioctyl sebacate | 5 | 1.0 | C | *3 |
| | | | 10 | 1.4 | C | *3 |
| Experiment Example 4 | Ionomer 4 (Zn ionomer) | None | 0 | 1.0 | *2 | 94.1 |
| | | Dimer acid 1 | 5 | 1.2 | A | 93.1 |
| | | | 10 | 2.4 | A | 92.3 |
| | | | 20 | 15.0 | A | 93.3 |
| | | | 30 | 55.0 | A | *3 |
| | | Dimer acid 2 | 5 | 1.9 | A | 92.9 |
| | | | 10 | 3.3 | A | 92.8 |
| | | | 20 | 18.2 | A | 92.3 |
| | | Diisononyl phthalate | 5 | 1.1 | C | *3 |
| | | | 10 | 1.3 | C | *3 |
| | | Dioctyl sebacate | 5 | 1.2 | C | *3 |
| | | | 10 | 1.6 | C | *3 |

| | | | | | | |
|---|---|---|---|---|---|---|
| *1: Content ratio [mass%] of dimer acid to total amount of ionomer and dimer acid *2: No bleed-out because of addition of no dimer acid. *3: Not measured | | | | | | |

**[Table 3]**

| | Ionomer | Added compound | | Evaluation | | |
|---|---|---|---|---|---|---|
| | | Kind | Added amount (*1) [%] | MFR [g/10 min] | Bleed-out | total luminous transmittance [%] |
| Experiment Example 5 | Ionomer 5 (Na ionomer) | None | 0 | 1.0 | *2 | 94.1 |
| | | Dimer acid 1 | 5 | 1.9 | A | 93.2 |
| | | | 10 | 4.6 | A | 92.8 |
| | | | 20 | 17.0 | A | 91.4 |
| | | | 30 | 55.0 | B | *3 |
| | | Dimer acid 2 | 5 | 2.6 | A | 2.6 |
| | | | 10 | 5.9 | A | 5.9 |
| | | | 20 | 65.3 | A | 65.3 |
| | | Diisononyl phthalate | 5 | 1.0 | A | *3 |
| | | | 10 | 1.3 | C | *3 |
| | | Dioctyl sebacate | 5 | 1.1 | A | *3 |
| | | | 10 | 2.0 | C | *3 |

| | | | | | | |
|---|---|---|---|---|---|---|
| *1: Content ratio [mass%] of dimer acid to total amount of ionomer and dimer acid *2: No bleed-out because of addition of no dimer acid. *3: Not measured | | | | | | |

As shown in Table 1-3 described above, in the samples in accordance with the present invention, MFRs were increased with hardly impairing the transparencies by adding the dimer acids, and the flowabilities were able to be improved by the addition of their small amounts compared with those of the conventionally known lubricants. Also, compatibility between the improvement in melt flowability and the suppression of bleed-out, which compatibility had been difficult to achieve in the conventional lubricants, was able to be achieved. In contrast, in the samples to be compared, bleed-out occurred even by adding the small amounts of the added compounds, and the flowabilities were able to be also hardly improved.

### INDUSTRIAL APPLICABILITY

The ionomer composition according to the present invention may preferably be used as encapsulants for solar cell elements and interlayers for the laminated glass of vehicles, ships, buildings and the like.

The entire disclosure of Japanese Patent Application No. 2009-235650 is incorporated herein into this specification by reference.
All documents, patent applications and technical specifications recited in this specification are incorporated herein by reference in this specification to the same extent as if each individual publication, patent applications and technical standard was specifically and individually indicated to be incorporated by reference.

## Claims

1. An ionomer composition comprising: an ionomer of an ethylene/α,β-unsaturated carboxylic acid copolymer; and a dimer acid.

2. The ionomer composition according to claim 1, wherein a content ratio of the dimer acid relative to 100 parts by mass of a total amount of the ionomer and the dimer acid is from 1 to 50 parts by mass.

3. The ionomer composition according to claim 1, wherein a content ratio of the dimer acid relative to 100 parts by mass of a total amount of the ionomer and the dimer acid is from 1 to 30 parts by mass.

4. The ionomer composition according to claim 1, wherein the α,β-unsaturated carboxylic acid is at least one of acrylic acid or methacrylic acid.

5. The ionomer composition according to claim 1, wherein the ethylene/α,β-unsaturated carboxylic acid copolymer is further copolymerized with an α,β-unsaturated carboxylic ester to provide an ethylene/α,β-unsaturated carboxylic acid/α,β-unsaturated carboxylic ester copolymer.

6. The ionomer composition according to claim 5, wherein the α,β-unsaturated carboxylic ester is an alkyl ester wherein the alkyl has from 1 to 8 carbon atoms of an unsaturated carboxylic acid.

7. The ionomer composition according to claim 1, wherein the ionomer is at least one selected from zinc ionomers of ethylene/(meth)acrylic acid copolymers, sodium ionomers of ethylene/(meth)acrylic acid copolymers, or magnesium ionomers of ethylene/(meth)acrylic acid copolymers.

8. A formed body molded using the ionomer composition according to any one of claim 1 to claim 7.

9. A method of producing a formed body, comprising melt-molding-processing the ionomer composition according to any one of claim 1 to claim 7.
